# EUROPEAN PATENT APPLICATION

(11) **EP 2 660 533 A2**
(43) Date of publication of application: **06.11.2013**
(21) Application number: 13154669.9
(22) Date of filing: 08.02.2013
(51) Int. Cl.: F24J 2/05, F24J 2/26, F24J 2/51

(54) **Thermal solar collector**

(30) Priority: 02.05.2012 AU 2012901795
(71) Applicant: Pintar, Marko, Brighton, VIC 3186 (AU); Zheng, Jing Jing, Brighton, VIC 3186 (AU)
(72) Inventor: Pintar, Marko, Brighton, VIC 3186 (AU); Zheng, Jing Jing, Brighton, VIC 3186 (AU)
(74) Representative: Patentanwälte Ruff, Wilhelm, Beier, Dauster & Partner

(57) **Abstract**

The invention relates to a thermal solar collector comprising a solar absorber structure (5) having a light-receiving front side (5b) and a rear side (5a) opposite said front side, and a heat transfer device (2, 4) including a heat transport flowing medium (4) in thermal contact to said solar absorber structure.

According to the invention a heat radiation shield (6) is arranged facing the rear side of said solar absorber structure for shielding said solar absorber structure rear side from radiating heat.

## Description

The invention relates to a thermal solar collector according to the preamble of claim 1.

Such solar collectors are known in various types, such as solar collectors having a vacuum tube housing and being of concentrating or non-concentrating type.

One type of such conventional thermal solar collectors comprises a single glass solar vacuum tube housing in which a plate-like solar absorber structure having a light-receiving front side and a rear side opposite said front side is arranged. A heat transfer device is arranged at the solar absorber structure rear side in thermal, i.e. heat conducting, contact thereto. The heat transfer device comprises a heat transfer tube in which a fluid or gaseous heat transport flowing medium is provided. In operation, the solar absorber structure receives light, e.g. from the sun, through the transparent glass tube housing at its front side and absorbs it, thereby being heated. The heat is then transported by heat conduction from the solar absorber plate through the heat transfer tube to the heat transport flowing medium which transports the heat to a desired place outside the vacuum glass tube housing.

Much effort has been invested by various designers of solar collectors over recent years towards increasing the ability of solar collectors to deliver high temperature heat efficiently. Efficiently here refers to a definition of the efficiency of the solar collector as the total heating power delivered by the solar collector to the heated medium divided by the solar power being applied to the entire surface area of the solar absorber at any instant of a thermal equilibrium. Heating power delivered by the solar collector to the intended medium (thermal load) at any instant during a thermal equilibrium also equals the power supplied to the collector by the source, typically the sun, minus the sum power of all heat losses from the solar collector. The sum power of all heat losses from the solar collector here is defined as the total of all heat received from the source but not delivered to the heated medium, i.e., to the intended thermal load. In other words, all heat losses are the proportion of all heat received by the solar collector which is lost to the environment, thus not contributing to delivering heat to the intended medium. Evidently, the key to a high thermal efficiency of a solar collector lies in reducing to a minimum all sources of heat losses from a solar collector into the environment.

For a long time, it has not been possible to obtain high temperature heat from non-concentrating solar collectors. This fact prevented the non-concentrating solar collectors from commercial applications requiring high load temperatures. In order to obtain high temperature heat output from solar energy, collector designers have resorted to solar concentration as a way of obtaining high temperature solar thermal power. The manufacturing cost of concentrated systems, their complexity, the necessity for an integrated tracking system and other moving parts, regular maintenance requirement, sensitivity to wind loads, demand for regular cleaning of optical concentrator components and other issues dramatically reduce the commercial appeal of concentrating solar collectors. And the installation of concentrating type solar collectors requires precise and time consuming optical alignment. Furthermore, the inability of concentrating solar collectors to deliver heat from a diffused source of solar irradiation effectively renders these concentrating collectors ineffective in all locations with predominantly diffused solar conditions. This means that the use of concentrating solar collectors is commercially viable mainly in desert-like environments where the bulk of annual solar irradiation comes from clear sky, with the sun as an open point-source of solar irradiation.

It is the technical problem underlying the invention to provide a thermal solar collector having increased efficiency as compared to the prior art collectors mentioned above, and which can be manufactured with fairly low effort.

The invention solves this problem by providing a thermal solar collector having the features of claim 1. Advantageous embodiments are mentioned in the dependent claims the wording of which is herewith incorporated into the description by reference to avoid unnecessary text repetition.

The thermal solar collector of the invention comprises a heat radiation shield arranged so as to face the rear side of the solar absorber structure so that it is able to shield the solar absorber structure rear side from radiating heat. As such heat radiation of the solar absorber structure rear side contributes to the heat losses of the collector, providing the heat radiation shield reduces the heat losses of the collector and thus enhances its efficiency.

In an advantageous embodiment of the invention the thermal solar collector comprises a vacuum housing in which the solar absorber structure as well as the heat transfer device and the heat radiation shield are arranged. Placing the heat radiation shield in the vacuum housing rather than outside the vacuum housing allows the heat radiation shield to settle at a higher temperature in operation of the thermal solar collector than a temperature of the outside environment. This can substantially reduce the net balance amount of heat flow from the solar absorber structure to the heat radiation shield. In a further development of the invention the vacuum housing may be a vacuum tube.

In an embodiment of the invention the heat radiation shield is arranged thermally decoupled from the solar absorber structure. This can avoid heat losses caused by heat conduction from the solar absorber structure to the heat radiation shield. For the same purpose the heat radiation shield may be arranged thermally decoupled from a vacuum housing.

In an embodiment of the invention the heat radiation shield is arranged to face substantially the whole solar absorber structure rear side. So the complete rear side of the solar absorber structure is shielded against heat losses caused by heat radiation emission of said rear side.

In an embodiment of the invention the heat transfer device is arranged at the rear side of said solar absorber structure in a space between the solar absorber structure and the heat radiation shield. This arrangement allows for structural and functional advantages. In a further refinement of this embodiment the heat transfer device comprises a heat transfer tube arranged at the solar absorber structure rear side in parallel thereto as well as in thermal contact thereto. The heat transfer tube guides the heat transport flowing medium which flows through the tube. The heat radiation shield is spaced from the solar absorber structure by a given distance. Again, this arrangement is advantageous in terms of construction and thermal efficiency.

In an embodiment of the invention the collector comprises a vacuum tube housing in which the solar absorber structure, the heat transfer device, and the heat radiation shield are arranged. This can e.g. be a conventional vacuum glass tube housing.

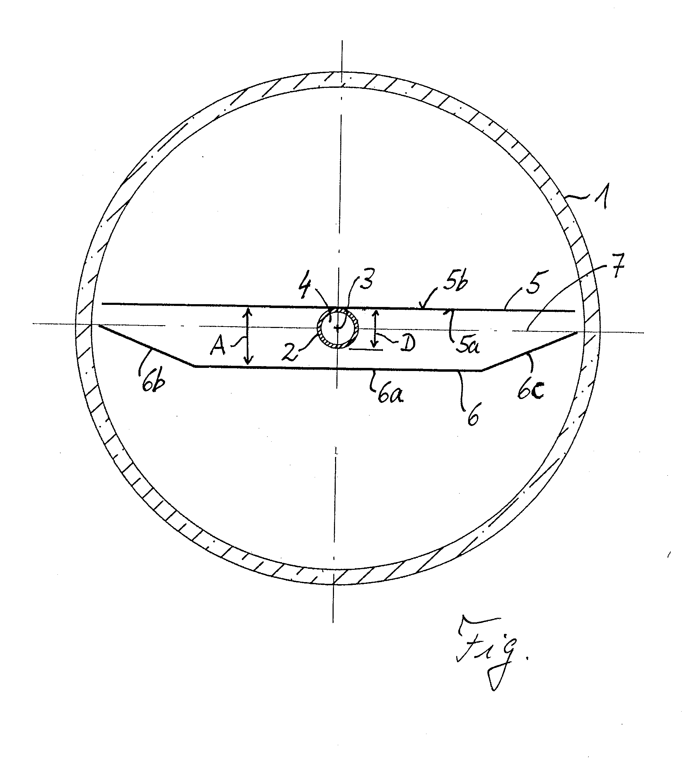

Advantageous embodiments of the invention are described in the following and shown in the drawing.

The only figure shows a simplified cross-sectional view of a thermal solar collector of a single glass vacuum tube type.

As seen from the figure, a thermal solar collector is shown there which is of a heat pipe type and comprises a vacuum housing 1 which in the present example is formed by a single glass solar vacuum tube. Of course, in alternative embodiments of the invention any other conventional solar collector vacuum housing type can be used. In a center region of the tube housing 1 a heat transfer tube 2 is arranged sharing a common length axis 3 with the tube housing 1. Inside the heat transfer tube 2 a heat transport flowing medium 4 is provided. This can be a fluid or gaseous medium flowing through the heat transfer tube 2 in lengthwise direction. The heat transfer tube 2 is arranged at a rear side 5a of a plate-shaped solar absorber structure 5 having a light-receiving front side 5b opposite said rear side 5a.

As regards the components so far mentioned, the thermal solar collector shown in the figure is of a conventional type. Characteristically, the thermal solar collector further comprises a heat radiation shield 6 facing the rear side 5a of the solar absorber structure 5. The heat radiation shield 6 is arranged in the vacuum housing 1. As seen from the figure, the heat radiation shield 6 in this example has a plate-light structure with a flat middle portion 6a extending parallel to the solar absorber plate 5, and two side portions 6b, 6c slanted with respect to the middle portion 6a in a direction towards the solar absorber plate 5. The flat middle portion 6a of the heat radiation shield 6 is spaced apart from the solar absorber plate 5 by a given distance A larger than a diameter D of the heat transfer tube 2.As further seen from the figure, the heat radiation shield plate 6 extends over substantially the whole extension area of the solar absorber plate 5, that means the heat radiation shield plate 6 faces substantially the whole solar absorber structure rear side 5a. In this way it envelopes a semi-cylindrical space behind the back side 5a of the absorber plate 5, where the slanted side portions 6b, 6c extend forward up to about a central plane 7 of the collector which is also a central plane of the heat transfer tube 2 and the vacuum tube 1.

The solar absorber structure 5 is of a conventional construction, such as a metal plate where a solar absorbing coating is applied at its front side 5b, i.e. the side normally facing the source of energy supplying light, such as solar radiation. The entire space of the vacuum tube housing 1 is typically evacuated to a very low absolute pressure of the order of 1 Pa or lower. In this manner heat losses from the solar absorber structure 5 to the environment by way of heat conduction through the space of the vacuum tube housing 1 are substantially eliminated. The front side 5b of the solar absorber 5 may be coated with a low-emissivity selective absorbing coating, such as a usual TiNOX coating. In addition, the heat radiation shield 6 reduces radiant heat loss from the rear side 5a of such high performance solar absorber structure 5. This radiant heat loss from the rear side would otherwise be of the same order of magnitude as the radiant heat loss from the absorbing front side coating, at a given absorber temperature. This is to say that the radiant heat loss from the rear side 5a of the absorber 5, in absence of any significant heat loss by way of heat conduction, amounts to about half of the total heat loss from the solar collector, said collector consisting typically of a multitude of vacuum type solar tubes only one of which being shown in the figure. Now, by providing the heat radiation shield 6 according to the invention allows for effectively shielding the absorber rear side 5a against this radiant heat loss contribution. The heat radiation shield 6 substantially reduces heat radiation loss from the absorber rear side 5a so that the solar absorber 5 is protected against a corresponding temperature decrease in operation. This in turn substantially increases the thermal efficiency of the solar collector as compared to conventional arrangements without such heat radiation shield. Providing the heat radiation shield 6 is thus a key means of improving the thermal performance and especially the high temperature thermal performance of solar collectors working with a solar absorber structure.

The heat radiation shield 6 in the example shown has no heat conductive connection to the solar absorber 5 so that it is thermally decoupled therefrom. This avoids any heat losses through heat conduction from the solar absorber 5 to the heat radiation shield 6. At the same time the heat radiation shield 5 is also thermally substantially separated from the tube housing 1. This means that the heat radiation shield 6 functions as a "floating" member from a thermal point of view. Any heat transfer from the solar absorber 5 to the heat radiation shield 6, as well as from the heat radiation shield 6 to the tube housing 1 by way of heat conduction is thus minimized. This ensures that the temperature of the heat radiation shield 6 in operation will settle at a temperature lower than the temperature of the solar absorber 5, and higher than the temperature of the general environment, thus minimizing any heat transfer from the solar absorber rear side 5a via the heat radiation shield 6 as a floating thermal and a secondary heat emitting member into the environment. As well known, the power transfer through thermal radiation, and thereby the radiant heat loss from a body at a given temperature higher than the environment temperature increases rapidly (with the power of 4) with the absolute temperature of the heat emitting body. A low temperature of the heat radiation shield 6 therefore keeps its heat radiation loss low.

It is of further advantage that heat radiation shield 6 is placed within the vacuum housing 1, as mentioned above. Having the heat radiation shield 6 arranged in the vacuum housing 1 and having it thermally decoupled from the other system parts and from the environment allows that the temperature of the heat radiation shield 6 in operation of the thermal solar collector will settle at a much higher temperature than the temperature of the outside air or other outside environment. This in turn substantially reduces the net balance amount of heat flow from the rear side 5a of the solar absorber 5 onto the heat radiation shield 6. With the entire semi-cylindrical space behind the rear side 5a of the solar absorber 5 being almost completely enveloped by the heat radiation shield 6 means that there is practically no other radiant heat loss from the rear side 5a of the solar absorber 5 additional to the net heat radiation balance received by the heat radiation shield 6. This concept effectively reduces the heat loss from the absorber structure 5 in addition to other factors known as such in the art including to have a low coefficient of emissivity of the rear side 5a of the solar absorber 5, a high coefficient of reflectivity of the heat radiation shield surface facing the rear 5a of the solar absorber 5, and a low coefficient of emissivity of the rear side of the heat radiation shield 6 itself. In a state of thermal equilibrium the net heat transfer by radiation from the rear side 5a of the solar absorber 5 to the heat radiation shield 6 will be identical to heat radiation from the rear side of the heat radiation shield 6 to the environment.

As becomes clear from the above explanations, by applying the heat radiation shield according to the present invention the heat loss by means of heat radiation from the rear side of the solar absorber, i.e. from its side facing away from the source of light irradiation, can be significantly reduced. This reduction of heat loss translates directly to useful heat, meaning that the entire reduction of the heat loss power is automatically available for delivery to the heated medium. Thus the collector's thermal output and efficiency, as defined above, can be increased markedly. Correspondingly, the collector's ability to deliver heat efficiently at even higher temperatures is enhanced. This helps making the solar collector viable for use in applications requiring high temperature heat.

As understood by those of ordinary skill, the present invention encompasses a multiplicity of other embodiments besides the one shown in the figure. In effect, the present invention can be embodied in many different realizations by equipping any conventional thermal solar collector having a solar absorber structure with a heat radiation shield for shielding a rear side of the solar absorber structure from radiating heat. The heat radiation shield may comprise a single shielding element or a multitude of shielding elements installed behind the rear side of the solar absorber, as needed. Any number of mutually thermally separated heat radiation shield elements may be used for the same purpose of reducing the radiant heat loss from the rear side of the solar absorber. This solar collector may be of any conventional type, such as a single glass vacuum tube solar collector with heat pipe, a single glass vacuum tube solar collector with direct-flow heat transfer, a vacuum tube solar collector with U-tube heat transfer, a vacuum tube solar collector of the concentrating type, or any other radiant thermal collector in which the thermal energy is supplied to one side only of the thermal absorber, with the other side not being exposed to the source of thermal radiation, such as sun light. In particular, the invention also includes thermal solar collectors others than those of the vacuum type. The present invention elevates the service temperature of non-concentrating vacuum tube solar collectors to a temperature level that without using the heat radiation shield requires deployment of mild-concentration-ratio solar collectors. The invention can be implemented to a broad design range of both non-concentrating and concentrating as well as tracking vacuum tube solar collectors.

## Claims

1. A thermal solar collector, comprising:
- a solar absorber structure (5) having a light-receiving front side (5b) and a rear side (5a) opposite said front side.
- a heat transfer device (2, 4) including a heat transport flowing medium (4) in thermal contact to said solar absorber structure, **characterized by**
- a heat radiation shield (6) arranged facing the rear side (5a) of said solar absorber structure (5) for shielding said solar absorber structure rear side from radiating heat.

2. The thermal solar collector of claim 1, further **characterized by** a vacuum housing (1) in which the solar absorber structure, the heat transfer device, and the heat radiation shield are arranged.

3. The thermal solar collector of claim 2, further **characterized in that** the vacuum housing is formed by a vacuum tube (1).

4. The thermal solar collector of any of claims 1 to 3, further **characterized in that** the heat radiation shield is arranged thermally decoupled from the solar absorber structure and/or from the vacuum housing.

5. The thermal solar collector of any of claims 1 to 4, further **characterized in that** the heat radiation shield is arranged to face substantially the whole rear side of the solar absorber structure.

6. The thermal solar collector of any of claims 1 to 5, further **characterized in that** the heat transfer device is arranged at the rear side of said solar absorber structure in a space between the solar absorber structure and said heat radiation shield.

7. The thermal solar collector of claim 6, further **characterized in that** the heat transfer device comprises a heat transfer tube (2) arranged at the solar absorber structure rear side and in parallel thereto as well as in thermal contact thereto, wherein the heat transfer tube includes said heat transport flowing medium and wherein the heat radiation shield is spaced from the solar absorber structure by a given distance.
